# EUROPÄISCHE PATENTSCHRIFT

(11) **EP 1 113 662 B1**
(45) Veröffentlichungstag und Bekanntmachung des Hinweises auf die Patenterteilung: **06.04.2005**
(21) Anmeldenummer: 00440317.6
(22) Anmeldetag: 05.12.2000
(51) Int. Cl.: H04M 19/00, H04M 1/76

(54) **Schaltungsanordung zur Begrenzung des Eingangwiderstandes einer a/b-Schnittstelle eines Fernmeldenetzes**
Circuit arrangement for limiting the input resistance of an a/b interface of a communications network
Agencement de circuit pour limiter l' impédance d'entrée d' un interface a/b dans une réseau de communication

(30) Priorität: 10.12.1999 DE 19959488
(43) Veröffentlichungstag der Anmeldung: 04.07.2001
(73) Patentinhaber: ALCATEL, 75008 Paris (FR)
(72) Erfinder: Klamt, Werner, D-31191 Algermissen (DE)
(74) Vertreter: Menzietti, Domenico, Dipl.-Ing

(56) Entgegenhaltungen:
- EP-A- 0 169 584
- DE-A- 3 429 330
- US-A- 4 984 250

## Beschreibung

Die Erfindung betrifft eine Schaltungsanordnung zur Begrenzung des Eingangswiderstandes an der teilnehmerseitigen a/b-Schnittstelle eines Fernmeldenetzes, die über eine Zweidrahtleitung mit einer Vermittlungsstelle des Fernmeldenetzes verbunden und durch eine einen Übertrager aufweisende Gabelschaltung abgeschlossen ist, bei welcher ein Teilnehmer mit seiner Teilnehmerschleife mit dem Übertrager verbunden ist, bei welcher an die Zweidrahtleitung ein erster Transistor mit seinem Strompfad angeschaltet ist, dessen Steuerelektrode mit dem Teilerpunkt eines ebenfalls an die Zweidrahtleitung angeschlossenen Spannungsteilers verbunden ist, und mit welcher in Abhängigkeit von der Höhe des in der Teilnehmerschleife fließenden Stroms eine untere und eine obere Grenze für den Eingangswiderstand eingestellt wird.

Für öffentliche Fernmeldenetze ist beispielsweise für den Eingangswiderstand der a/b-Schnittstelle eines an eine Vermittlungsstelle des Fernmeldenetzes angeschlossenen Teilnehmers ein Widerstandsbereich vorgeschrieben, der von der Höhe des in der zugehörigen Schaltung fließenden Stroms abhängt. Der Widerstandsbereich hat bei Strömen bis zu 20 mA eine untere Grenze von 300 Ω und bei Strömen über 16 mA eine obere Grenze von 1000 Ω. Die untere Grenze des Eingangswiderstands läßt bei höheren Strömen niedrigere Widerstandswerte zu. Sie ist für einen kleinen Innenwiderstand der speisenden Spannungsquelle definiert, damit der Strom aus thermischen Gründen nicht zu groß wird. Die obere Grenze des Eingangswiderstands ist vorgeschrieben, damit keine zu große Spannungsquelle eingesetzt werden muß. Bei kleineren Strömen läßt sie größere Widerstandswerte zu.

Bekannte Schaltungen, wie sie beispielsweise im öffentlichen Fernmeldenetz Deutschlands eingesetzt werden, sind so ausgelegt, daß der Eingangswiderstand bei niedrigen Strömen von beispielsweise 1,8 mA zwischen 300 Ω und 2800 Ω beträgt. Damit liegt unter Berücksichtigung der unteren Grenze des Eingangswiderstandes auch die Widerstandskurve bei höheren Strömen von 20 mA und darüber fest. Ströme zwischen 20 mA und 30 mA fließen im üblichen Betriebsbereich der im Gesprächszustand befindlichen Schaltung. Der Widerstandskurve ist eine Gleichspannung als Speisespannung zugeordnet, die oberhalb der Steuerspannung eines in der speisenden Spannungsquelle befindlichen Transistors liegt. Die benötigte Steuerspannung liegt üblicherweise zwischen 2,0 V und 4,0 V.

Die bekannten Schaltungen funktionieren solange, wie die Amplitude einer der Speisespannung überlagerten Wechselspanung eine bestimmte Größe nicht überschreitet. Sie ist daher beispielsweise für die gemeinsame Übertragung von Sprachsignalen (NF) und Gebührenimpulsen mit großer Amplitude (16 kHz, 11Veff) nicht geeignet. Es ist dann nämlich nicht zu vermeiden, daß die Steuerspannung des Transistors bei jeder Schwingung des Gebührenimpulses unterschritten wird. Der Schleifenstrom wird dann jeweils unterbrochen. Die Übertragung wird gestört. Bei den bekannten Schaltungen wird daher ein Sperrfilter-Schwingkreis für den Gebührenimpuls eingesetzt, der dann nicht mit der NF, sondern auf einem anderen Weg übertragen wird. Ein solches Sperrfilter ist nicht nur ein teures Bauteil, sondern es kann auch nur eine bestimmte Frequenz sperren.

EP-A-0 169 584 offenbart eine Schaltungsanordnung zur elektrischen Speisung von Einrichtungen in einem Fernsprechapparat.

Der Erfindung liegt die Aufgabe zugrunde, die eingangs beschriebene Schaltungsanordnung so zu gestalten, daß Wechselspannungen mit großer Amplitude sich nicht störend bemerkbar machen.

Diese Aufgabe wird gemäß der Erfindung dadurch gelöst,
- daß an die Steuerelektrode des ersten Transistors ein bipolarer Transistor mit seinem Strompfad angeschlossen ist, in den ein ohmscher Widerdstand eingeschaltet ist, und
- daß die Steuerelektrode des bipolaren Transistors mit dem Strompfad des ersten Transistors verbunden ist.

Mit dieser Schaltungsanordnung kann der Gebührenimpuls zusammen mit der NF auf die Sekundärseite des Übertragers übertragen werden. Ein aufwendiges Vorfilter bzw. Sperrfilter wird nicht benötigt. Es wird nur die untere Grenze des Eingangswiderstandes innerhalb des vorgegebenen Widerstandsbereichs zu einem höheren Wert verschoben. Die Speisespannung, welcher der Gebührenimpuls überlagert wird, ist dadurch so weit angehoben, daß die Steuerspannung des ersten Transistors durch den Gebührenimpuls nicht mehr unterschritten wird.

Ein Ausführungsbeispiel der Erfindung ist in den Zeichnungen dargestellt.

Es zeigen:
Fig. 1 schematisch eine Übertragungsstrecke digitaler Signale.
Fig. 2 eine Einzelheit aus Fig. 1
Fig. 3 die Schaltungsanordnung nach der Erfindung.

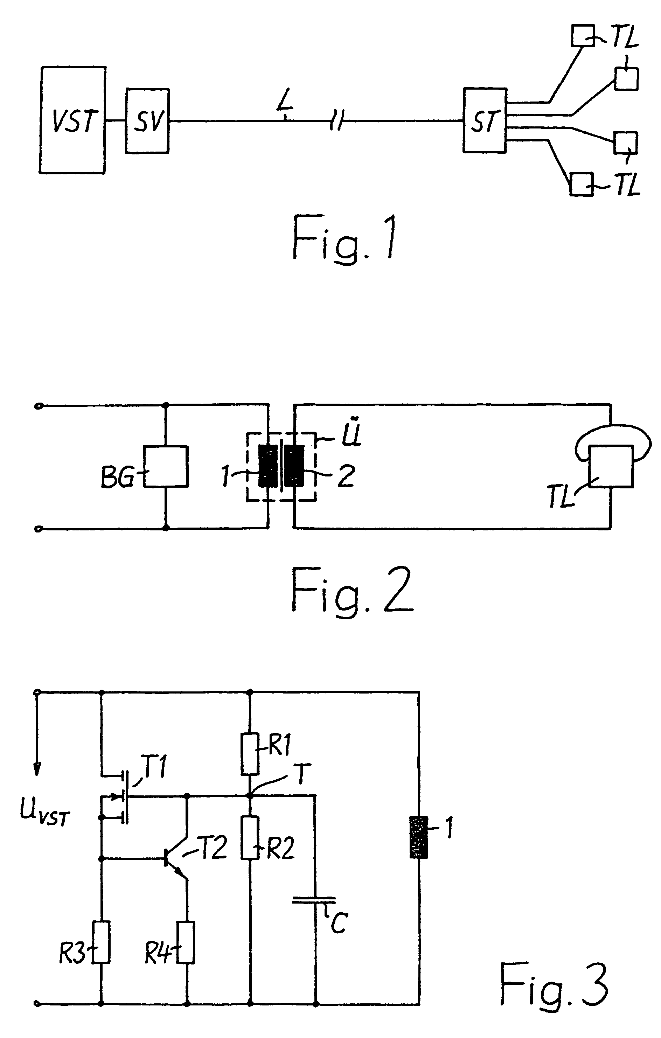

Gemäß Fig. 1 sind an eine Vermittlungsstelle VST eines Fernmeldenetzes vier Teilnehmer TL angeschlossen. Die nachrichtentechnischen Signale werden zwischen zwei Systemeinheiten SV und ST als digitale Signale über eine Zweidrahtleitung L übertragen. Auf den analogen Seiten der Systemeinheiten SV und ST sind die Vermittlungsstelle VST einerseits und die Teilnehmer TL andererseits angeschlossen.

In der Systemeinheit SV befindet sich für jeden Teilnehmer TL neben einem A/D-Umsetzer und anderen nicht mit dargestellten Bauteilen ein Übertrager Ü, der durch eine gestrichelte Linie umrandet ist. Der Übertrager Ü ist Teil einer sogenannten Gabelschaltung. Er schließt die jeweilige Teilnehmerleitung an der a/b-Schnittstelle ab. Der Übertrager Ü hat eine Primärwicklung 1 und eine Sekundärwicklung 2. An die Primärwicklung 1 ist die Systemeinheit ST angeschlossen, die mit der Vermittlungsstelle VST verbunden ist. An die Sekundärwicklung 2 des Übertragers Ü ist ein Teilnehmer TL mit seiner Teilnehmerschleife angeschlossen. An der a/b-Schnittstelle ist eine Begrenzerschaltung BG eingeschaltet, deren Aufbau und Wirkungsweise aus Fig. 3 hervorgehen.

An die von der Vermittlungsstelle VST gelieferte Spannung ist parallel zum Übertrager Ü ein erster Transistor T1 mit seinem Strompfad angeschlossen, in dem ein ohmscher Widerstand R3 liegt. Der erste Transistor T1 kann ein bipolarer Transistor sein. In bevorzugter Ausführungsform ist als erster Transistor T1 ein Feldeffekttransistor (FET) eingesetzt. Statt der Bezeichnung "erster Transistor 1" wird deshalb im folgenden die Bezeichnung "FET1" verwendet. Die Gateelektrode des FETs T1 ist mit dem Teilerpunkt T eines aus zwei ohmschen Widerständen R1 und R2 bestehenden Spannungsteilers verbunden.

Mit der Schaltungsanordnung nach der Erfindung wird die untere Begrenzung der Widerstandskurve an der a/b-Schnittstelle eines Fernmeldenetzes zu höheren Werten verschoben. Schaltungstechnisch wird das gemäß der Fig. 2 durch einen Widerstand R4 erreicht, der über einen bipolaren Transistor T2 parallel zu dem die Gatespannung des FETs T1 mitbestimmenden Widerstand R2 geschaltet ist. Der FET T1 ist an die Spannungsquelle der Vermittlungsstelle VST angeschlossen. Er liegt in Reihe mit dem Widerstand R3, an dem definitionsgemäß etwa 0,7 V abfallen. Die Gatespannung des FETs T1 wird durch den aus den Widerständen R1 und R2 bestehenden Spannungsteiler bestimmt. Sie liegt definitionsgemäß zwischen 2,5 V und 3,0 V. Ein Kondensator C kann das Zeitverhalten der Schaltungsanordnung beeinflussen, so daß sie als Induktivität wirkt. Dadurch wird die Dämpfung der anliegenden Wechselspannung wesentlich reduziert, so daß auf der Sekundärseite des Übertragers Ü ein höherer Wechselspannungspegel zur Verfügung steht.

Mit der Gateelektrode des FETs 1 ist der Transistor T2 mit seinem Strompfad verbunden, in dem der Widerstand R4 liegt. Die Basis des Transistors T1 ist zwischen FET T1 und Widerstand R3 angeschlossen. Im Gesprächszustand fließt ein erhöhter Strom über den FET T1. Am Widerstand R3 fällt eine erhöhte Spanung ab. Der Transistor T2 wird stromdurchlässig. Der Widerstand R4 liegt dann parallel zum Widerstand R2 des Teilers. Die Gatespannung des FETs T1 wird dadurch verringert. Der über denselben fließende Strom ebenfalls. Der Widerstand der Schaltung und damit die Speisespannung werden entsprechend erhöht.

## Patentansprüche

1. Schaltungsanordnung zur Begrenzung des Eingangswiderstandes an der teilnehmerseitigen a/b-Schnittstelle eines Fernmeldenetzes, die über eine Zweidrahtleitung (L) mit einer Vermittlungsstelle (VST) des Fernmeldenetzes verbunden und durch eine einen Übertrager aufweisende Gabelschaltung abgeschlossen ist, bei welcher ein Teilnehmer mit seiner Teilnehmerschleife mit dem Übertrager verbunden ist, bei welcher an die Zweidrahtleitung ein erster Transistor mit seinem Strompfad angeschaltet ist, dessen Steuerelektrode mit dem Teilerpunkt eines ebenfalls an die Zweidrahtleitung angeschlossenen Spannungsteilers verbunden ist, und mit welcher in Abhängigkeit von der Höhe des in der Teilnehmerschleife fließenden Stroms eine untere und eine obere Grenze für den Eingangswiderstand eingestellt wird, **dadurch gekennzeichnet,**
- **daß** an die Steuerelektrode des ersten Transistors (T1) ein bipolarer Transistor (T2) mit seinem Strompfad angeschlossen ist, in den ein ohmscher Widerstand (R4) eingeschaltet ist, und
- **daß** die Steuerelektrode des bipolaren Transistors (T2) mit dem Strompfad des ersten Transistors (T1) verbunden ist.

2. Schaltungsanordnung nach Anspruch 1, **dadurch gekennzeichnet, daß** der erste Transistor (T1) ein Feldeffekttransistor ist, an dessen Sourceelektrode die Steuerelektrode des bipolaren Transistors (T2) angeschlossen ist.

3. Schaltungsanordnung nach Anspruch 1, **dadurch gekennzeichnet, daß** der erste Transistor (T1) ein bipolarer Transistor ist.

## Claims

1. A circuit arrangement for limiting the input resistance at the subscriber-side a/b interface of a telecommunications network, which is connected to an exchange (VST) of the telecommunications network via a two-wire line (L) and is terminated by a hybrid comprising a transformer, wherein a subscriber is connected to the transformer via his subscriber loop, wherein a first transistor has its current path connected to the two-wire line and its control electrode coupled to the tap of a voltage divider which is also connected to the two-wire line, and whereby a lower limit and an upper limit for the input resistance can be set as a function of the magnitude of the current flowing in the subscriber loop, **characterized in**
- **that** a bipolar transistor (T2) has its current path connected to the control electrode of the first transistor (T1), said current path containing a resistor (R4), and
- **that** the control electrode of the bipolar transistor (T2) is connected to the current path of the first transistor (T1).

2. A circuit arrangement as claimed in claim 1, **characterized in that** the first transistor (T1) is a field-effect transistor having its source electrode connected to the control electrode of the bipolar transistor (T2).

3. A circuit arrangement as claimed in claim 1, **characterized in that** the first transistor (T1) is a bipolar transistor.

## Revendications

1. Agencement de circuit pour limiter la résistance d'entrée sur l'interface a/b côté abonné d'un réseau de télécommunication, qui est relié par une ligne bifilaire (L) à un centre de commutation (VST) du réseau de télécommunication et est terminé par un termineur présentant un translateur, sur lequel un abonné est relié au translateur par sa boucle d'abonné, sur lequel un premier transistor est raccordé à la ligne bifilaire par son trajet de courant, dont l'électrode de commande est reliée au point séparateur d'un diviseur de tension raccordé également à la ligne bifilaire, et avec lequel une limite inférieure et une limite supérieure pour la résistance d'entrée sont réglées en fonction du niveau du courant circulant dans la boucle d'abonné, **caractérisé en ce qu'**à l'électrode de commande du premier transistor (T1) est raccordé un transistor (T2) bipolaire avec son trajet de courant, dans lequel est intégré une résistance (R4) ohmique et **en ce que** l'électrode de commande du transistor (T2) bipolaire est reliée au trajet de courant du premier transistor (t1).

2. Agencement de circuit selon la revendication 1, **caractérisé en ce que** le premier transistor (T1) est un transistor à effet de champ, à l'électrode de source duquel est raccordée l'électrode de commande du transistor (T2) bipolaire.

3. Agencement de circuit selon la revendication 1, **caractérisé en ce que** le premier transistor (T1) est un transistor bipolaire.
